# EUROPÄISCHE PATENTSCHRIFT

(11) **EP 1 269 020 B1**
(45) Veröffentlichungstag und Bekanntmachung des Hinweises auf die Patenterteilung: **02.05.2007**
(21) Anmeldenummer: 01933576.9
(22) Anmeldetag: 22.03.2001
(51) Int. Cl.: F03H 1/00

(54) **PLASMA-BESCHLEUNIGER-ANORDNUNG**
PLASMA ACCELERATOR ARRANGEMENT
DISPOSITIF ACCELERATEUR DE PLASMA

(30) Priorität: 22.03.2000 DE 10014033
(43) Veröffentlichungstag der Anmeldung: 02.01.2003
(73) Patentinhaber: Thales Electron Devices GmbH, 89077 Ulm (DE)
(72) Erfinder: KORNFELD, Günter, 89275 Elchingen (DE); SCHWERTFEGER, Werner, 89143 Blaubeuren (DE)
(74) Vertreter: Weber, Gerhard
(86) Internationale Anmeldenummer: PCT/DE2001/001106
(87) Internationale Veröffentlichungsnummer: WO 2001/071185

(56) Entgegenhaltungen:
- EP-A- 0 541 309
- WO-A-01/72093
- DE-A- 19 828 704
- DE-B- 1 222 589
- DE-C- 4 302 630
- US-A- 3 270 236
- US-A- 3 461 033
- US-A- 5 847 493

## Beschreibung

Die Erfindung betrifft eine Plasma-Beschleuniger-Anordnung.

Plasma-Beschleuniger-Anordnungen sind insbesondere in Form sogenannter Hall-Anordnungen bekannt. Hierbei wird einer Plasma-Kammer ein ionisierbares Gas, insbesondere ein Edelgas zugeleitet. Die Plasma-Kammer ist im wesentlichen ringförmig um eine zentrale Längsachse und ist in einer zur Längsachse parallelen Haupt-Ausstoßrichtung offen. Der Ausstoßrichtung entgegengesetzt ist am Fuße der Plasma-Kammer eine Anode angeordnet. Eine Kathode als Elektronenquelle ist außerhalb der Plasma-Kammer radial gegen diese versetzt angeordnet. Die Wände der Plasma-Kammer bestehen aus nichtleitendem Material. Ein Magnetsystem erzeugt in der Plasma-Kammer ein im wesentlichen radial ausgerichtetes Magnetfeld durch einen ersten, innenliegenden und einen zweiten, außenliegenden Magnetpol. Ein von der Kathode emmitierter Elektronenstrom wird in dem elektrischen Feld zwischen Kathode und Anode beschleunigt und der Plasma-Kammer zugeführt und in der Plasma-Kammer durch das radiale Magnetfeld senkrecht zu dem elektrischen Potentialgradienten und senkrecht zu den Magnetfeldlinien umgelenkt und ionisiert das in der Kammer befindliche Treibstoffgas. Aus dem dabei gebildeten Plasma werden die positiv geladenen Ionen in Ausstoßrichtung beschleunigt. Ein Teil der von der Kathode emmitierten Elektronen dient zur Neutralisierung des lonenstrahls.

Eine derartige Anordnung, bei welcher durch eine besondere Magnetfeldausbildung eine Erhöhung des Wirkungsgrads und der Lebensdauer beabsichtigt ist, ist beispielsweise aus der EP 0 541 309 A1 bekannt. Ein inneres und ein äußeres Spulensystem bewirken über sich im Ausstoßbereich der ringförmigen Plasma-kammer radial beabstandet gegenüberstehende, entgegengesetzt gepolte Magentpolschuhe in diesem Bereich der Plasmakammer ein im wesentlichen radiales Magnetfeld. Der tieferliegende Bereich der Plasmakammer mit der ringförmigen Elektrode ist von einer magnetischen Abschirmung umgeben.

Die US 5 847 493 A zeigt einen Plasma-Beschleuniger nach dem Hall-Effekt, bei welchem eine innere und eine äußere Spulenanordnung jeweils zwei in Ausstoßrichtung beabstandete Magnetpole erzeugen, wobei die sich jeweils radial gegenüberstehenden Pole von innerer bzw. äußerer Spulenanordnung entgegengesetzt gepolt sind und wiederum das im wesentlichen radiale Magnetfeld erzeugen. Eine ähnliche Plasma-Beschleuniger-Anordnung mit teilweise konisch geformten Polschuhen ist in der EP 0 982 976 A1 beschrieben.

Die DE 198 28 704 A1 beschreibt eine Plasma-Beschleuniger-Anordnung, bei welcher in eine kreiszylindrische Plasma-Kammer ein außerhalb der Kammer beschleunigter gebündelter Elektronenstrahl auf der Längsachse eingeleitet und durch eine die Plasma-Kammer zylindrisch umgebende permanent-periodische Magnetanordnung mit alternierend ausgerichteten Stufen auf der Achse geführt wird.

Die US 3 461 033 beschreibt u. a. eine Anordnung zur Beschleunigung eines Plasmas mittels eines starken Magnetfeldpulses. Ein Gasstoß wird in eine Plasma-kammer eingeleitet und durch eine gepulste lonisationsspule in ein Plasma umgewandelt, welches in einer magnetischen Cusp-Struktur zwischen zwei Ringspulen kurzzeitig eingeschlossen und in definierter Position gehalten ist. Durch einen hohen kurzen Magnetpuls einer im Längsbereich der Cusp-Struktur angeordneten Induktionswindung wird in dem eingeschlossenen Plasma ein Ringstrom erzeugt, welcher durch Wechselwirkung mit dem Cusp-Feld das Plasma in Längsrichtung beschleunigt.

Aufgabe der vorliegenden Erfindung ist es, eine hinsichtlich Wirkungsgrad und Lebensdauer weiter verbesserte Plasma-Beschleuniger-Anordnung, insbesondere als Antriebsquelle für Raumflugkörper anzugeben.

Die Erfindung ist im Patentanspruch 1 beschrieben. Die abhängigen Ansprüche enthalten vorteilhafte Ausgestaltungen und Weiterbildungen der Erfindung.

Ein wesentlicher Aspekt der vorliegenden Erfindung ist die gegenüber bekannten Anordnungen grundlegend andere Ausgestaltung des Magnetfeldes, welches die Plasma-Kammer durchsetzt. Während bei den bekannten Anordnungen das Magnetsystem mit einem Polsystem innenliegend und mit einem zweiten Polsystem außenliegend bezüglich der toroidalen Plasma-Kammer im wesentlichen radial ausgerichtet und häufig über einen magnetischen Rückschlußweg hinter der Plasma-Kammer geschlossen ist, sieht die Erfindung ein Magnetsystem vor, welches sowohl radial innenliegend als auch radial außenliegend bezüglich der Plasma-Kammer eine Magnetanordnung mit einem Polwechsel in Längsrichtung, d. h. in einer zur Längsachse der Anordnung parallelen Richtung aufweist. Insbesondere können bei einer bevorzugten Anordnung die Polwechsel von äußerer und innerer Magnetanordnung gleichsinnig sein, so daß sich radial durch die Plasma-Kammer getrennt gleiche Magnetpole der beiden separaten Magnetanordnungen gegenüber stehen.

Das Magnetsystem kann in einer ersten Ausführung einstufig ausgeführt sein mit für das außenliegende und das innenliegende Magnetsystem jeweils einem Polwechsel durch in Längsrichtung beabstandeten entgegengesetzten Magnetpolen. Wenigstens jeweils einer der beiden Magnetpole befindet sich in Längsrichtung im Bereich der Plasma-Kammer. Vorzugsweise liegen beide in Längsrichtung beabstandeten Pole des einstufigen Magnetsystems innerhalb der Längserstreckung der Plasma-Kammer. Besonders vorteilhaft ist eine Anordnung, bei welcher das Magnetsystem mehrstufig ausgeführt ist mit in Längsrichtung mehreren aufeinanderfolgenden Teilsystemen, von denen jeweils jedes eine außenliegende und eine innenliegende Magnetanordnung aufweist und bei welchem die in Längsrichtung aufeinanderfolgenden Teilsysteme alternierend gegensinnig ausgerichtet sind. Die sich radial gegenüberstehenden Pole sind vorzugsweise gleichsinnig, wodurch sich eine besonders vorteilhafte Verteilung der Elektronendrift ergibt.

Besonders günstig ist eine Plasma-Beschleuniger-Anordnung gemäß der Erfindung, bei welcher zwischen der Kathode und der Anode im Bereich der Seitenwände der Plasma-Kammer noch wenigstens eine Elektrodenanordnung vorliegt, welche auf einem Zwischenpotential zwischen Kathodenpotential und Anodenpotential liegt. Auf einer solchen Elektrode können Elektronen eingefangen werden, welche lediglich Energie aus einem Teil der Potentialdifferenz zwischen Kathode und Anode aufgenommen haben. Die Potentialdifferenz zwischen Kathode und Anode kann dadurch in zwei oder mehr Beschleunigungsstufen unterteilt werden. Verluste durch Elektronen-Wand-Stöße können dadurch wesentlich verringert werden. Insbesondere der elektrische Wirkungsgrad nimmt monoton mit der Anzahl der Potentialstufen zu. Vorteilhafterweise sind die Elektroden in Längsrichtung jeweils zwischen die Polenden eines Magnetsystems bzw. Magnetteilsystems gelegt. Hierdurch ergibt sich ein besonders günstiger Verlauf von elektrischen und magnetischen Feldern.

Die Erfindung ist nachfolgend unter Bezugnahme auf die Abbildungen anhand bevorzugter Ausführungsbeispiele noch detailliert erläutert. Dabei zeigt:
- Fig. 1: eine bekannte Plasma-Kammer in Seitenansicht
- Fig. 2: Feldverläufe und Ströme in einer erfindungsgemäßen Plasma-Kammer
- Fig. 3: eine Ansicht in Richtung der Symmetrieachse zu Fig. 2
- Fig. 4: eine Stufe einer Magnetanordnung
- Fig. 5: einen bevorzugten Aufbau in Seitenansicht
In der Plasmaphysik ist bekannt, daß in Folge der hohen Beweglichkeit der Elektronen bedingt durch ihre geringe Masse im Vergleich zu den meist positiv geladenen Ionen das Plasma sich ähnlich wie ein metallischer Leiter verhält und ein konstantes Potential annimmt.

Befindet sich ein Plasma zwischen zwei Elektroden unterschiedlichen Potentials, so nimmt das Plasma jedoch näherungsweise das Potential der Elektrode mit dem für die positiven Ionen höheren Potential (Anode) an, weil sich die Elektronen so lange sehr schnell zu der Anode bewegen, bis sich das Potential des Plasmas auf dem näherungsweise konstanten Potential der Anode befindet und das Plasma damit feldfrei ist. Nur in einer vergleichsweise dünnen Grenzschicht an der Kathode fällt das Potential im sogenannten Kathodenfall steil ab.

In einem Plasma lassen sich also nur dann unterschiedliche Potentiale aufrechterhalten, wenn die Leitfähigkeit des Plasmas nicht isotrop ist. Eine vorteilhafte starke Anisotropie der Leitfähigkeit läßt sich bei der erfindungsgemäßen Anordnung auf günstige Weise erzeugen. Da Elektronen in Folge der Lorentzkraft bei einer Bewegung quer zu Magnetfeldlinien eine Kraft senkrecht zu den Magnetfeldlinien und senkrecht zur Bewegungsrichtung erfahren, lassen sich Elektronen zwar in Richtung der Magnetfeldlinien leicht verschieben, d. h. in Richtung der Magnetfeldlinien besteht eine hohe elektrische Leitfähigkeit und ein Potentialgefälle in dieser Richtung wird leicht ausgeglichen. Einer Beschleunigung der Elektronen durch eine elektrische Feldkomponente senkrecht zu den Magnetfeldlinien wirkt aber die genannte Lorentzkraft entgegen, so daß sich die Elektronen spiralförmig um die Magnetfeldlinien bewegen. Senkrecht zu den Magnetfeldlinien können demzufolge elektrische Felder ohne sofortigen Ausgleich durch Elektronenfluß bestehen. Für die Stabilität solcher elektrischer Felder ist es besonders günstig, wenn die zugehörigen elektrischen Äquipotentialflächen näherungsweise parallel zu den Magnetfeldlinien verlaufen und damit elektrische und magnetische Felder im wesentlichen gekreuzt sind.

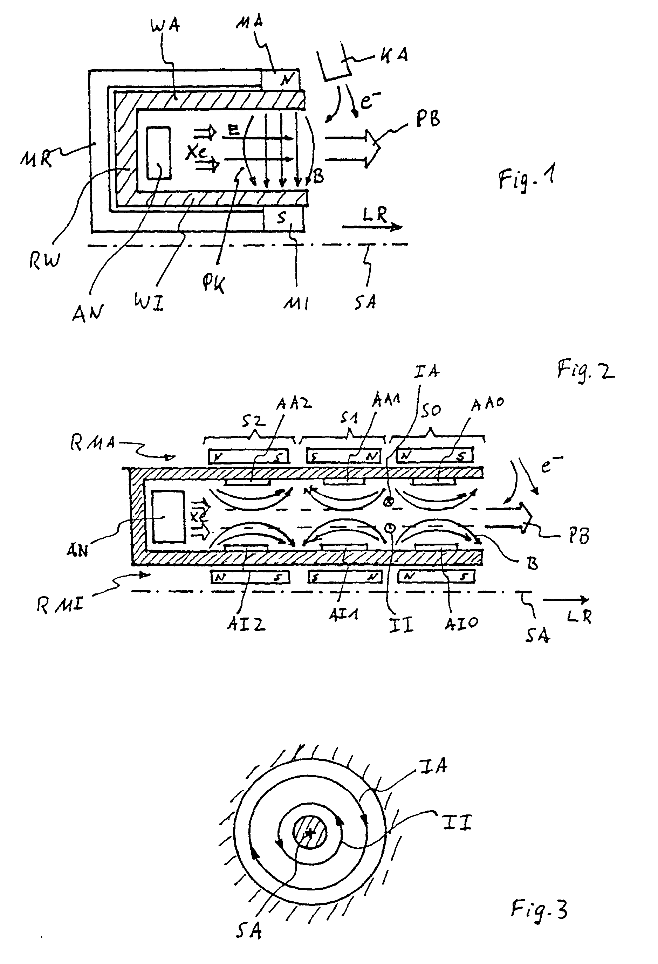

In Figur 1 ist der prinzipielle Aufbau eines herkömmlichen Plasma-Beschleunigers nach dem Hall-Prinzip (Hall-Thruster) skizziert. Eine Plasma-Kammer PK ist toroidförmig um eine zentrale Symmetrieachse SA ausgeführt und weist isolierende Seitenwände WA, WI sowie eine Rückwand RW auf. Die Plasma-Kammer ist in einer zur Symmetrieachse SA parallelen Längsrichtung LR einseitig offen und kann an dieser Stelle auch ein Beschleunigungsgitter aufweisen.

Außerhalb der Plasma-Kammer ist einer Kathode KA als Elektronenquelle angeordnet. Eine Anode AN ist an dem der Ausstoßöffnung AU abgewandten fußseitigen Ende der Plasma-Kammer angeordnet. Eine elektrisches Feld E zwischen Anode und Kathode verläuft innerhalb der Plasma-Kammer im wesentlichen parallel zur Längsrichtung LR. Ein Magnetsystem weist einen radial außenliegenden ersten Magnetpol MA (beispielsweise Nordpol) und einen zweiten radial innenliegenden Magnetpol MI (beispielsweise Südpol) auf. Die beiden Magnetpole sind im wesentlichen ringförmig symmetrisch zu der Symmetrieachse SA ausgebildet und über einen magnetischen Rückschluß MR hinter der Plasma-Kammer verbunden. Das Magnetsystem erzeugt in der Plasma-Kammer PK ein im wesentlichen radial ausgerichtetes Magnetfeld B.

Ein Teil der von der Kathode emmitierten Elektronen wird in dem elektrischen Feld zwischen Anode und Kathode beschleunigt und in die Plasmakammer geleitet und dort durch das Magnetfeld B senkrecht zu Bewegungsrichtung der Elektronen und senkrecht zur den Magnetfeldlinien, d. h. in der Skizze im wesentlichen senkrecht zur Zeichenebene abgelenkt. Durch die so erzwungene Driftbewegung der Elektronen um die Symmetrieachse verbleiben diese Elektronen über längere Zeit in der Plasma-Kammer bevor sie auf die Anode AN gelangen. Während der Bewegung innerhalb der Plasma-Kammer erzeugen die Elektronen durch Stöße mit in die Plasma-Kammer eingeleitetem Gas, beispielsweise Xenon, positive Ionen und Sekundärelektronen. Die Ionen und Elektronen bilden ein hoch leitfähiges Plasma in der Plasma-Kammer. Die Ionen werden aus der Kammer in Längsrichtung ausgestoßen. Um eine Aufladung der Anordnung zu vermeiden, werden dem ausgestoßenen Ionenstrom Elektronen aus der Kathode KA zugefügt, so daß der ausgestoßene Plasmastrahl PB elektrisch neutral ist. Eine solche Anordnung ist in verschiedenen Ausführungen an sich bekannt.

Die Fig. 2 zeigt eine mehrstufige Anordnung nach der vorliegenden Erfindung, bei welcher wiederum in einer im wesentlichen toroidalen Plasma-Kammer, deren Form im einzelnen Variationen zugänglich ist, bei einer der Ausstoßrichtung abgewandten Rückwand eine Anode angeordnet ist. Wesentlich bei der Anordnung nach Fig. 2 ist, daß das Magnetsystem nicht mehr einen äußeren und einen inneren Pol, welche durch einen magnetischen Rückschluß verbunden sind, aufweist, sondern daß bezüglich der Plasma-Kammer außenliegend eine Magnetanordnung RMA vorhanden ist, welche bei jeder der in Längsrichtung parallel zur Symmetrieachse aufeinanderfolgenden Stufen S0, S1, S2 in sich beide entgegengesetzten Magnetpole in Längsrichtung LR beabstandet aufweist. In gleicher Weise ist eine bezüglich der Plasma-Kammer radial innenliegende weitere mehrstufige Magnetordnung RMI vorgesehen, welche wiederum bei jeder Stufe in sich beide Magnetpole in Längsrichtung LR beabstandet aufweist. Die beiden Magnetanordnungen RMA und RMI jeder Stufe stehen sich radial gegenüber mit in Längsrichtung LR im wesentlichen gleicher Erstreckung. Die beiden Magnetanordnungen sind mit gleicher Ausrichtung, d. h. in Längsrichtung LR gleicher Polfolge ausgerichtet. Dadurch stehen sich gleiche Pole (N-N bzw. S-S) radial gegenüber und die magnetischen Felder sind für jede der beiden Magnetanordnungen in sich geschlossen. Der Verlauf der Magnetfelder von radial gegenüberstehenden Magnetanordnungen RMA und RMI kann dadurch durch eine im wesentlichen in der Mitte der Plasma-Kammer liegende Mittenfläche getrennt angesehen werden. Die Magnetfeldlinien verlaufen zwischen den Magnetpolen jeder Anordnung gekrümmt, ohne durch diese Mittenfläche, welche nicht notwendigerweise eben ist, hindurchzutreten. Auf jeder radialen Seite einer solchen Mittenfläche wirkt damit im wesentlichen lediglich das Magnetfeld einer der beiden Magnetanordnungen RMA bzw. RMI.

Ein wesentlicher Unterschied der Anordnung nach Fig. 2 besteht darin, daß das Magnetfeld in der Plasma-Kammer nicht zwischen zwei entgegengesetzten Polen im wesentlichen monoton radial verläuft, sondern die Magnetfeldlinien auf derselben radialen Seite der Mittenfläche in der toroidalen Plasma-Kammer geschlossen werden.

Die vorstehenden Ausführungen gelten auch für ein Magnetsystem mit lediglich einer einfachen inneren und äußeren Stufe. Eine solche einfache Magnetstufe kann beispielsweise durch zwei konzentrische ringförmige Permanentmagnete mit im wesentlichen parallel zur Symmetrieachse SA beabstandeten Polen gebildet sein. Eine solche Anordnung ist isoliert in Fig. 4 skizziert.

Bevorzugt ist eine Ausführung der Erfindung nach Fig. 2, bei welcher in Längsrichtung LR zwei oder mehrere solcher Anordnungen hintereinander angeordnet sind, wobei die Polausrichtung aufeinanderfolgender Magnetanordnungen gegensinnig ist, so daß die sich in Längsrichtung gegenüberstehenden Pole aufeinanderfolgender Magnetanordnungen gleichartig sind und somit kein magnetischer Feldkurzschluß auftritt und die Ausführung beschriebenen Feldverläufe im wesentlichen für alle aufeinanderfolgenden Stufen erhalten bleiben.

Die aufeinanderfolgenden Magnetfelder wirken zum einen fokusierend auf die von der Kathode emmitierten und in die Plasma-Kammer geleiteten PrimärElektronen und verhindern zum anderen den Abfluß von in der Plasma-Kammer erzeugten Sekundärelektronen von einer Stufe zur nächsten.

Bevorzugt ist eine Plasma-Beschleuniger-Anordnung, bei welcher neben Kathode und Anode noch wenigstens eine weitere Elektrode vorgesehen ist, welche auf einem Zwischenkathodenpotential und Anodenpotential liegenden Zwischenpotential liegt. Eine solche Zwischenelektrode ist vorteilhafterweise an wenigstens einer Seitenwand, vorzugsweise in Form von zwei Teilelektroden gegenüberliegend an der inneren und äußeren Seitenwand der Plasma-Kammer angeordnet. Insbesondere günstig ist es, die Elektrode in ihrer Lage in Längsrichtung zwischen zwei Magnetpole zu positionieren. In der Anordnung nach Fig. 2 sind in Längsrichtung mehrere Stufen S0, S1, S2 mit jeweils einem magnetischen Teilsystem und jeweils einem Elektrodensystem vorgesehen. Die magnetischen Teilsysteme bestehen jeweils aus einem inneren und einem äußeren Magnetring wie bereits beschrieben und in Fig. 4 skizziert. Die Teilelektrodensysteme umfassen in den aufeinanderfolgenden Stufen S0, S1, S2 jeweils einen äußeren Elektrodenring AA0, AA1, AA2 und radial gegenüberstehend einen inneren Elektrodenring AI0, AI1, AI2, wobei die Erstreckung der Elektroden in Längsrichtung für die äußeren und die inneren Ringe im wesentlichen gleich ist. Die einander gegenüberstehenden Elektrodenringe jedes Teilsystems, also AA0 und AI0 bzw. AA1 und AI1 bzw. AA2 und AI2 liegen jeweils auf gleichem Potential, wobei insbesondere die Elektroden AA0 und AI0 auf Massepotential der gesamten Anordnung liegen können. Die durch die Elektroden erzeugten elektrischen Felder verlaufen in für die Ausbildung des Plasmas wesentlichen Bereichen annähernd senkrecht zu den magnetischen Feldlinien. Insbesondere im Bereich des größten Potentialgradienten zwischen den Elektroden aufeinanderfolgenden Stufen verlaufen die magnetischen und elektrischen Feldlinien im wesentlichen gekreuzt, so daß die entlang der Bahn der Primärelektronen erzeugten Sekundärelektronen keinen direkten Kurzschluß der Elektroden verursachen können. Da sich die Sekundärelektronen nur entlang der Magnetfeldlinien des im wesentlichen toroidalen mehrstufigen Magnetsystems bewegen können, bleibt der erzeugte Plasmastrahl im wesentlichen auf das Zylinderschichtvolumen der fokusierten Primärelektronen begrenzt. Ausbuchtungen des Plasmas gibt es im wesentlichen lediglich im Bereich des Vorzeichenwechsels der achsialen Magnetfeldkomponente, wo das Magnetfeld im wesentlichen radial auf die Pole der Magnetanordnungen zeigt.

Bei der skizzierten Anordnung ergeben sich Plasmakonzentrationen in Längsrichtung in Positionen zwischen aufeinanderfolgenden Elektroden, welche zugleich mit den Polstellen der aufeinanderfolgenden Magnetanordnungen zusammenfallen. Mit der in Fig. 2 skizzierten Anordnung kann vorteilhafterweise das Plasma in den einzelnen aufeinanderfolgenden Stufen auf die stufenweise unterschiedlichen Potentiale der aufeinanderfolgenden Elektroden gelegt werden. Hierzu sind insbesondere die Elektroden und die Magnetanordnungen in Längsrichtung so angeordnet, daß die räumlichen Phasenlagen des quasiperiodischen Magnetfelds gegenüber dem gleichfalls quasiperiodischen elektrischen Felds gemessen zwischen Betragsminimum des achsialen magnetischen Felds gegen Elektrodenmitten um maximal +/- 45°, insbesondere maximal +/-15° verschoben ist. Hierbei kann ein Kontakt der Magnetfeldlinien mit der an der Seitenwand der Plasma-Kammer angeordneten Elektrode erreicht und durch die leichte Verschiebbarkeit der Elektronen entlang der Magnetfeldlinien das Plasmapotential auf das Elektrodenpotential dieser Stufe gesetzt werden. Die Plasma-Konzentrationen zu verschiedenen aufeinanderfolgenden Stufen befinden sich damit auf unterschiedlichen Potentialen.

Der Ort des größten Potentialgradienten in achsialer Richtung liegt damit in einer Plasmaschicht, die durch die in achsialer Richtung elektrisch isolierend wirkenden radialen Magnetfeldverläufe gekennzeichnet ist. An diesen Stellen erfolgt im wesentlichen die Beschleunigung der positiven Ionen in Längsrichtung. Da genügend Sekundärelektronen vorhanden sind, welche als Hallströme auf geschlossenen Driftbahnen in der toroidalen Struktur kreisen, wird ein im wesentlichen neutrales Plasma in Längsrichtung zur Ausstoßöffnung der Plasma-Kammer hin beschleunigt. Dabei geben sich in einer Schichtebene an einer bestimmten Position in Längsrichtung LR der Anordnung in unterschiedlichen Radien entgegengesetzte ringförmige Hallströme II bzw. IA wie in Fig. 2 und Fig. 3 skizziert.

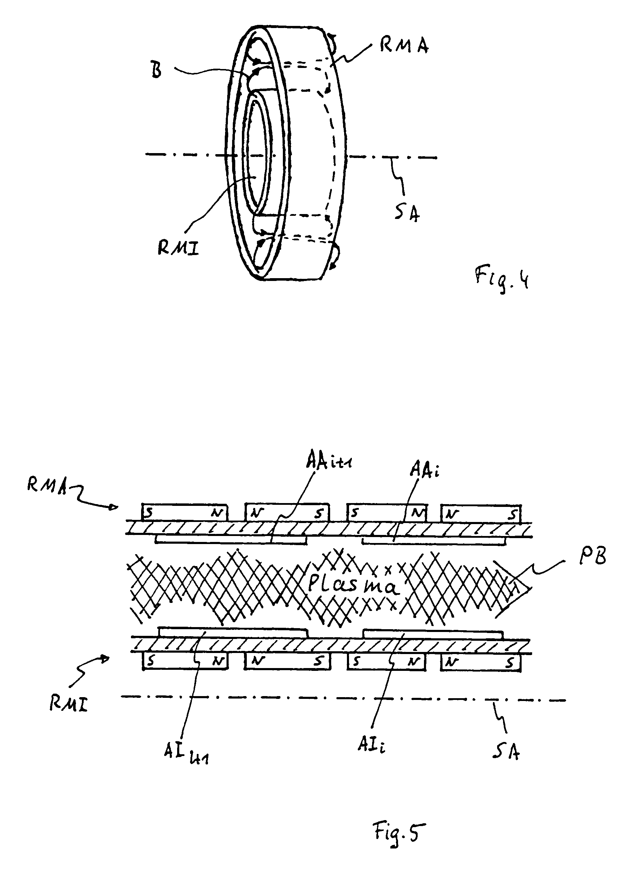

Die genannte günstige Phasenverschiebung der quasiperiodischen magnetischen und elektrischen Strukturen läßt sich zum einen durch eine Anordnung nach Fig. 2 mit der genannten zulässigen Verschiebung der Elektroden gegenüber der dort skizzierten Position um die genannten maximal +/- 45°, insbesondere maximal +/- 15° erreichen. Eine alternative Variante ist in Fig. 5 skizziert, wo die Periodenlänge der in Längsrichtung beabstandeten Elektrodenstufen Aaᵢ, AAᵢ₊₁ bzw. Alᵢ, Alᵢ₊₁ doppelt so groß ist wie die Periodenränge aufeinanderfolgender Magnetringanordnungen. Eine solche Anordnung kann auch in Stufen mit gegenüber Fig. 2 doppelter Länge unterteilt werden, welche dann jeweils zwei entgegengerichtete Magnet-Teilsysteme und ein Elektrodensystem enthalten.

Bei der in Fig. 5 skizzierten Anordnung ergeben sich in Bereichen, wo die Elektroden die Polstellen aufeinanderfolgender Magnet-Teilsysteme überbrücken, Kontaktzonen, an welchen die den Magnetlinien folgenden Sekundärelektronen von den Elektroden aufgenommen werden und somit eine Kontaktzone zwischen dem Plasma und einer Elektrode entsteht, wogegen an Polstellen, welche zugleich zwischen zwei in Längsrichtung aufeinanderfolgenden Elektroden liegen, eine Isolationszone mit hohem Potentialgradient im Plasma entsteht.

In einer anderen Ausführungsform eines in Längsrichtung mehrstufigen Magnetsystems können gegenüberstehender äußerer Magnetring und innerer Magnetring jeder Stufe auch mit entgegengesetzter Polausrichtung vorgesehen sein, so daß sich in einem Fig. 2 entsprechenden Längsschnitt durch die Anordnung zu jeder Stufe eine magnetisches Quadrupol-Feld ergibt. Die übrigen geschilderten Maßnahmen gemäß der Erfindung sind bei einer solchen Anordnung in entsprechender Weise anwendbar. Die Driftstromverläufe sind abweichend von Fig. 3 in einer Ebene senkrecht zur Längsrichtung gleichsinnig.

Die vorstehend und in den Ansprüchen angegebenen Merkmale sind sowohl einzeln als auch in verschiedenen Kombinationen vorteilhafte realisierbar. Die Erfindung ist nicht auf die beschriebenen Ausführungsbeispiele beschränkt, sondern im Rahmen fachmännischen Könnens auf mancherlei Weise abwandelbar. Insbesondere ist nicht zwingend eine strenge Symmetrie um die Symmetrieachse SA erforderlich. Vielmehr kann eine gezielte Unsymmetrie dem symmetrischen Verlauf überlagert sein. Die Ringform von Feldern, Elektroden oder Magnetanordnungen bedeutet nicht notwendigerweise eine kreiszylindrische Form, sondern kann von einer solchen sowohl hinsichtlich der Drehsymmetrie als auch des zylindrischen Verlaufs in Längsrichtung abweichen.

## Patentansprüche

1. Plasma-Beschleuniger-Anordnung mit einer Kathode, einer Anode und einer zwischen Kathode und Anode angeordneten Plasma-Kammer mit einem ionisierbaren Gas, wobei die Plasma-Kammer (PK) im wesentlichen ringförmig um eine zentrale Längsachse ausgebildet ist und ein Magnet-system eine äußere und eine innere Magnetanordnung (RMI,RMA), aufweist, welche radial durch die Plasma-Kammer getrennt sind und jede für sich in Längsrichtung wenigstens einen Polwechsel in Längsrichtung aufweist, **dadurch gekennzeichnet, dass** die Polwechsel in Längsrichtung für beide Magnetanordnungen (RMI,RMA) gleichsinnig sind.

2. Anordnung nach Anspruch 1, **dadurch gekennzeichnet, daß** die Magnetpole wenigstens einer, vorzugsweise beider Magnetanordnungen (RMI,RMA) im Bereich der Längserstreckung der Plasma-Kammer (PK) liegen.

3. Anordnung nach Anspruch 1 oder 2, **dadurch gekennzeichnet, daß** an wenigstens einer Seitenwand der Plasma-Kammer (PK) eine Elektrodenanordnung vorgesehen ist, welche elektrisch auf einem Zwischenpotential zwischen den Potentialen von Kathode und Anode liegt.

4. Anordnung nach Anspruch 3, **dadurch gekennzeichnet, daß** die Elektrodenanordnung wenigstens zwei an gegenüberliegenden Seitenwänden der Plasma-Kammer (PK) angeordnete Teilelektroden umfaßt.

5. Anordnung nach Anspruch 3 oder 4, **dadurch gekennzeichnet, daß** die Elektroden in Längsrichtung zwischen den Magnetpolen der Magnet-anordnungen (RMI,RMA) liegen.

6. Anordnung nach einem der Ansprüche 1 bis 5, **dadurch gekennzeichnet, daß** mehrere Magnetanordnungen (RMI, RMA) in Längsrichtung aufeinanderfolgend mit alternierender Polausrichtung vorgesehen sind.

7. Anordnung nach Anspruch 6, **dadurch gekennzeichnet, daß** mehrere Zwischen-Elektroden in Längsrichtung aufeinanderfolgend auf gestuften Zwischen-Potentialen liegend an den Seitenwänden der Plasma-Kammer (PK) angeordnet sind.

8. Anordnung nach Anspruch 7, **dadurch gekennzeichnet, daß** zumindest ein Teil der Zwischenelektroden in Längsrichtung Polstellen aufeinanderfolgender Magnetanordnungen (RMI,RMA) teilweise oder vollständig überdeckt.

## Claims

1. Plasma accelerator arrangement having a cathode, an anode and a plasma chamber arranged between cathode and anode and having an ionizable gas, the plasma chamber (PK) being formed substantially annularly around a central longitudinal axis and a magnetic system having an outer and an inner magnet arrangement (RMI, RMA), which are separated radially by the plasma chamber and each on its own in the longitudinal direction has at least one pole change in the longitudinal direction, **characterized in that** the pole changes in the longitudinal direction take place in the same direction for both magnet arrangements (RMI, RMA).

2. Arrangement according to Claim 1, **characterized in that** the magnetic poles of at least one, preferably both magnet arrangements (RMI, RMA), are located in the area of the longitudinal extent of the plasma chamber (PK).

3. Arrangement according to Claim 1 or 2, **characterized in that** an electrode arrangement is provided on at least one side wall of the plasma chamber (PK), and is electrically connected to an intermediate potential between the potentials of cathode and anode.

4. Arrangement according to Claim 3, **characterized in that** the electrode arrangement comprises at least two part electrodes arranged on opposite side walls of the plasma chamber (PK).

5. Arrangement according to Claim 3 or 4, **characterized in that** the electrodes are located in the longitudinal direction between the magnetic poles of the magnet arrangements (RMI, RMA).

6. Arrangement according to one of Claims 1 to 5, **characterized in that** a plurality of magnet arrangements (RMI, RMA) following one another in the longitudinal direction are provided with an alternating pole alignment.

7. Arrangement according to Claim 6, **characterized in that** a plurality of intermediate electrodes following one another in the longitudinal direction and connected to stepped intermediate potentials are arranged on the side walls of the plasma chamber (PK).

8. Arrangement according to Claim 7, **characterized in that** at least some of the intermediate electrodes in the longitudinal direction partially or completely cover pole points of successive magnet arrangements (RMI, RMA).

## Revendications

1. Agencement d'accélérateur de plasma, avec une cathode, une anode et une chambre à plasma disposée entre la cathode et l'anode, avec un gaz ionisable, la chambre à plasma (PK) étant conçue sous forme sensiblement annulaire autour d'un axe longitudinal central et un système magnétique comportant un agencement extérieur et un agencement intérieur d'aimants (RMI, RMA), qui sont séparés en direction radiale par la chambre à plasma et qui comportent chacun pour soi en direction longitudinale au moins une alternance polaire, en direction longitudinale, **caractérisé en ce que** les alternances polaires en direction longitudinale sont de même sens pour les deux agencements d'aimants (RMI, RMA).

2. Agencement selon la revendication 1, **caractérisé en ce que** les pôles magnétiques d'au moins un, de préférence des deux agencements d'aimants (RMI, RMA) se situent dans la zone d'extension longitudinale de la chambre à plasma (PK).

3. Agencement selon la revendication 1 ou 2, **caractérisé en ce que** sur au moins une paroi latérale de la chambre à plasma (PK) est prévu un agencement d'électrodes, qui est électriquement sur un potentiel intermédiaire entre les potentiels de la cathode et de l'anode.

4. Agencement selon la revendication 3, **caractérisé en ce que** l'agencement d'électrodes comprend au moins deux électrodes partielles disposées sur des parois latérales opposées de la chambre à plasma (PK) .

5. Agencement selon la revendication 3 ou 4, **caractérisé en ce que** les électrodes se situent en direction longitudinale entre les pôles magnétiques des agencements d'aimants (RMI, RMA).

6. Agencement selon l'une quelconque des revendications 1 à 5, **caractérisé en ce que** plusieurs agencements d'aimants (RMI, RMA) sont prévus successivement en direction longitudinale, avec une orientation polaire alternée.

7. Agencement selon la revendication 6, **caractérisé en ce que** plusieurs électrodes intermédiaires qui sont sur des potentiels intermédiaires étagés sont disposées successivement en direction longitudinale, sur les parois latérales de la chambre à plasma (PK).

8. Agencement selon la revendication 7, **caractérisé en ce qu'**au moins une partie des électrodes intermédiaires recouvre en direction longitudinale des zones polaires d'agencements d'aimants successifs (RMI, RMA).
